# EUROPEAN PATENT APPLICATION

(11) **EP 4 831 134 A1**
(43) Date of publication of application: **28.10.2026**
(21) Application number: 24906859.4
(22) Date of filing: 02.10.2024
(51) Int. Cl.: C02F 1/58, C02F 1/62

(54) **METHOD FOR REDUCING COBALT CONTENT IN CYANOCOBALT COMPLEX-CONTAINING AQUEOUS SOLUTION**

(30) Priority: 20.12.2023 JP 2023215171
(71) Applicant: KANEKA CORPORATION, Osaka 530-8288 (JP)
(72) Inventor: WERNER, Canters, B2260 Westerlo-Oevel (BE); ODAKA, Hidetoshi, Tokyo 107-6028 (JP)
(74) Representative: Vossius & Partner Patentanwälte Rechtsanwälte mbB
(86) International application number: PCT/JP2024/035247
(87) International publication number: WO 2025/134470

(57) **Abstract**

Provided is a method for reducing a cobalt content in a cyanocobalt complex-containing aqueous solution, the method being capable of reducing a cobalt content in an aqueous solution even under conditions other than high-temperature and high-pressure conditions. This method involves: generating a first precipitate in a cobalt-containing acidic aqueous solution by adding a copper compound and a dithiocarbamate polymer to a cyanocobalt complex-containing aqueous solution in a state where the pH is less than 5.0, and adjusting the pH of the cobalt-containing acidic aqueous solution to 8.0 or more after the first precipitate is generated to generate a second precipitate in the cobalt-containing basic aqueous solution, wherein at least part of the first precipitate and at least part of the second precipitate generated by the above method are removed.

## Description

### TECHNICAL FIELD

The present invention relates to a method for reducing a content of cobalt in a cyanocobalt complex-containing aqueous solution.

### BACKGROUND ART

A cured product of a composition including a polyoxyalkylene polymer modified with a hydrolyzable silyl group has an excellent property such as durability, heat or cold resistance, economic efficiency, etc. For this reason, the composition including a polyoxyalkylene polymer modified with a hydrolyzable silyl group has been used in various applications such as a sealant. A known method for producing a polyoxyalkylene polymer modified with a hydrolyzable silyl group is to introduce an unsaturated bond at an end of the polyoxyalkylene polymer and add a hydrosilane compound to the unsaturated bond at the end via a hydrosilylation reaction. The polyoxyalkylene polymer can be produced by ring-opening polymerization of an alkylene oxide in the presence of a double metal cyanide catalyst (DMC catalyst). In the above-described producing method, the DMC catalyst is removed from the polyoxyalkylene polymer into which the unsaturated bond has been introduced when the polyoxyalkylene polymer into which the unsaturated bond has been introduced is purified with water. Thus, when a zinc hexacyanocobaltate complex is used as the DMC catalyst, an aqueous solution drained during the purification of the polymer with water includes a cyanocobalt complex.

Here, many countries have set a standard for a cobalt content in an effluent. In Europe, in particular, there is a region where a strict effluent standard for the cobalt content is scheduled to be set in the future, or where a standard value may be lowered in stages and eventually regulated to 50 µg/L or less. Therefore, for the purpose of ensuring that the cobalt content in the effluent meets the effluent standard, it is necessary to reduce a content of cobalt in a cyanocobalt complex-containing aqueous solution as much as possible. Note that, the content of cobalt does not necessarily have to be reduced to the effluent standard or less in one treatment. If the content of cobalt can be reduced to some extent in one treatment, a dilution factor can be reduced when the effluent is diluted to allow the content of cobalt in the effluent to meet the effluent standard. Even if the effluent is repeatedly treated to reduce the content of cobalt in the effluent to the effluent standard or less, the content of cobalt in the effluent can be reduced to the effluent standard or less with a small number of treatments.

As a means of solving such a problem, a method of a wet oxidation treatment of an effluent including a heavy metal species such as cobalt has been proposed (see Patent Document 1). Specifically, in the method described in Patent Document 1, when wet oxidation is performed, a content of a water-soluble or water-miscible iron compound in the effluent is adjusted to a specific amount, followed by wet oxidation treatment of the effluent under a high temperature and high pressure to produce a precipitate including a heavy metal element, and then the precipitate is removed from the effluent. Thus, a heavy metal is removed from the effluent.

### Citation List

### Patent Documents

Patent Document 1: Japanese Unexamined Patent Application, Publication No. H6-182364

### DISCLOSURE OF THE INVENTION

### Problems to be Solved by the Invention

However, the wet oxidation treatment in Patent Document 1 is performed under a high temperature and high pressure. The treatment under a high temperature and high pressure requires an expensive pressure-resistant device. Furthermore, sufficient care must be taken to ensure safety of operations for the treatment under a high temperature and high pressure.

The present invention has been made in view of the above problem, and an object thereof is to provide a method for reducing a content of cobalt in a cyanocobalt complex-containing aqueous solution, the method being capable of reducing the content of cobalt in the aqueous solution without a high-temperature and high-pressure condition.

### Means for Solving the Problems

The present inventors have found that the above problem can be solved by, in a method including adding a copper compound and a dithiocarbamate polymer to a cyanocobalt complex-containing aqueous solution at a pH of less than 5.0 to produce a first precipitate in a cobalt-containing acidic aqueous solution and adjusting the pH of the cobalt-containing acidic aqueous solution in which the first precipitate has been produced to 8.0 or more to produce a second precipitate in a cobalt-containing basic aqueous solution, removing at least a portion of the first precipitate produced by the above method and at least a portion of the second precipitate, and thus the present invention has been completed.

More specifically, the present invention provides the following (1) to (4):
(1) A method for reducing a content of cobalt in a cyanocobalt complex-containing aqueous solution comprising a cyanocobalt complex, the method including:
   mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0;
   adjusting the pH of the cobalt-containing acidic aqueous solution in which the first precipitate has been produced to 8.0 or more to produce a second precipitate in a cobalt-containing basic aqueous solution; and
   removing at least a portion of the first precipitate and at least a portion of the second precipitate from the cobalt-containing basic aqueous solution including the first precipitate and the second precipitate.
(2) A method for reducing a content of cobalt in a cyanocobalt complex-containing aqueous solution comprising a cyanocobalt complex, the method including:
   mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0, thereby obtaining a cobalt-containing acidic aqueous solution including the first precipitate;
   removing at least a portion of the first precipitate from the cobalt-containing acidic aqueous solution including the first precipitate;
   adjusting the pH of the cobalt-containing acidic aqueous solution from which at least a portion of the first precipitate has been removed to 8.0 or more to produce a second precipitate; and
   removing at least a portion of the second precipitate from a cobalt-containing basic aqueous solution including the second precipitate.
(3) The method according to (1) or (2), in which the copper compound is copper(II) sulfate.
(4) The method according to any one of (1) to (3), in which the cyanocobalt complex is a zinc hexacyanocobaltate complex.
(5) The method according to (4), in which the cyanocobalt complex-containing aqueous solution is a solution resulting from a method for producing a polyoxyalkylene polymer, the method for producing a polyoxyalkylene polymer including polymerizing alkylene oxide using the zinc hexacyanocobaltate complex as a catalyst.
(6) The method according to any one of (1) to (5), in which the cyanocobalt complex-containing aqueous solution includes sodium chloride.

### Effects of the Invention

The present invention can provide a method for reducing a content of cobalt in a cyanocobalt complex-containing aqueous solution, the method being capable of reducing the content of cobalt in the aqueous solution without a high-temperature and high-pressure condition.

### PREFERRED MODE FOR CARRYING OUT THE INVENTION

### <<First method>>

A method for reducing a content of cobalt in a cyanocobalt complex-containing aqueous solution comprising a cyanocobalt complex, the method including:
mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0;
adjusting the pH of the cobalt-containing acidic aqueous solution in which the first precipitate has been produced to 8.0 or more to produce a second precipitate in a cobalt-containing basic aqueous solution; and
removing at least a portion of the first precipitate and at least a portion of the second precipitate from the cobalt-containing basic aqueous solution including the first precipitate and the second precipitate is hereinafter referred to as a first method.

In the first method, firstly, a cyanocobalt complex-containing aqueous solution having a pH of less than 5.0, a copper compound, and a dithiocarbamate polymer are mixed, or a cyanocobalt complex-containing aqueous solution having a pH of 5.0 or more, an acid, a copper compound, and a dithiocarbamate polymer are mixed to produce a first precipitate in a cobalt-containing acidic aqueous solution having a pH of less than 5.0.

### (Cyanocobalt complex-containing aqueous solution)

A cyanocobalt complex included in a cyanocobalt complex-containing aqueous solution is not particularly limited. Typical examples of the cyanocobalt complex include a compound to be used as a catalyst for polymerizing alkylene oxide in the below-described method for producing a polyoxyalkylene polymer. The cyanocobalt complex is preferably a zinc hexacyanocobaltate complex. The cyanocobalt complex-containing aqueous solution may include a water-soluble cobalt compound other than the cyanocobalt complex, along with the cyanocobalt complex.

A content of cobalt in the cyanocobalt complex-containing aqueous solution is not particularly limited. For example, the content of cobalt in 1 L of the cyanocobalt complex-containing aqueous solution is preferably 500 µg or more and 10000 µg or less and more preferably 1000 µg or more and 5000 µg or less. Note that, the content of cobalt in 1 L of the cyanocobalt complex-containing aqueous solution can be measured using a high-frequency inductively coupled plasma mass spectrometry (ICP-MS) device.

The cyanocobalt complex-containing aqueous solution may include an organic matter unless the desired effect is impaired. Depending on an amount of the organic matter included in the cyanocobalt complex-containing aqueous solution, the cyanocobalt complex-containing aqueous solution including the organic matter is preferably subjected to a treatment for removing the organic matter in an activated sludge tank, etc., after cobalt is removed by the first method.

As described above, the cyanocobalt complex is typically a catalyst for polymerizing alkylene oxide in the method for producing a polyoxyalkylene polymer. Typical examples of the cyanocobalt complex-containing aqueous solution include an aqueous solution produced during a purification step in a process of producing a polyoxyalkylene polymer modified with a hydrolyzable silyl group. Production of the cyanocobalt complex-containing aqueous solution during the purification step in the process of producing a polyoxyalkylene polymer modified with a hydrolyzable silyl group is described below.

Examples of the method for producing a polyoxyalkylene polymer modified with a hydrolyzable silyl group include a method including:
obtaining a polyoxyalkylene polymer via a ring-opening polymerization reaction of alkylene oxide in the presence of a double metal cyanide catalyst (DMC catalyst);
reacting a terminal hydroxy group of the polyoxyalkylene polymer with a metal alkoxide to metal-alkoxidize a terminus of the polyoxyalkylene polymer;
reacting the thus-alkoxidized terminus of the polyoxyalkylene polymer with an unsaturated group-containing halide to introduce an unsaturated bond to the terminus of the polyoxyalkylene polymer;
purifying the polyoxyalkylene polymers having the unsaturated bond at its terminus so that an alkali metal halide, which is a byproduct of a reaction of the alkoxidized terminus with an unsaturated group-containing halogen compound, is removed from the polyoxyalkylene polymer having the unsaturated bond at its terminus; and
introducing a hydrolyzable silyl group at a terminus of the polyoxyalkylene polymer via a hydrosilylation reaction between the unsaturated bond at the terminus of the polyoxyalkylene polymer and hydrosilane that provides a hydrolyzable silyl group.

The DMC catalyst is not particularly limited as long as it has a catalytic activity that promotes the ring-opening polymerization of the alkylene oxide. The DMC catalyst is preferably a zinc hexacyanocobaltate complex. An alcohol and/or an ether may be coordinated to the zinc hexacyanocobaltate complex as an organic ligand.

The alkylene oxide is not particularly limited as long as it is a compound capable of undergoing a ring-opening polymerization. Examples of the alkylene oxide include, for example, an alkylene oxide such as ethylene oxide, propylene oxide, α-butylene oxide, β-butylene oxide, hexene oxide, cyclohexene oxide, styrene oxide, or α-methylstyrene oxide; a substituted or unsubstituted glycidyl ether having 2 to 12 carbon atoms such as methyl glycidyl ether, ethyl glycidyl ether, isopropyl glycidyl ether, butyl glycidyl ether, allyl glycidyl ether, or phenyl glycidyl ether, etc.

An initiator is usually used in the ring-opening polymerization reaction of the alkylene oxide. The initiator is not particularly limited as long as it can be used for producing the polyoxyalkylene polymer. Examples of the initiator include, for example, a monohydric alcohol such as methanol, ethanol, 1-propanol, 2-propanol, n-butyl alcohol, isobutyl alcohol, sec-butyl alcohol, tert-butyl alcohol, 1-pentanol, 2-pentanol, 3-pentanol, 2-methyl-1-butanol, 3-methyl-1-butanol, 2-methyl-2-butanol, 3-methyl-2-butanol, or 2,2-dimethyl-1-propanol; a polyhydric alcohol such as ethylene glycol, propylene glycol, butanediol, hexamethylene glycol, methallyl alcohol, hydrogenated bisphenol A, neopentyl glycol, polybutadienediol, diethylene glycol, triethylene glycol, polyethylene glycol, polypropylene glycol, polypropylene triol, polypropylene tetraol, dipropylene glycol, glycerin, trimethylolmethane, trimethylolpropane, or pentaerythritol; various polymers each having a hydroxy group, etc.

A main chain structure of the polyoxyalkylene polymer is composed of oxyalkylene repeating units. The main chain structure of the polyoxyalkylene polymer may be branched or cross-linked. In addition to a plurality of the oxyalkylene repeating units, the polyoxyalkylene polymer may include a structure derived from an initiator to be used upon polymerization.

Examples of the oxyalkylene repeating units include - CH₂CH₂O-, -CH(CH₃)CH₂O-, -CH (C₂H₅)CH₂O-, -C(CH₃)₂CH₂O-, - CH₂CH₂CH₂CH₂O-, etc.

The oxyalkylene repeating units include, for example, oxyalkylene units each having 1 to 10 carbon atoms.

A metal alkoxide is not particularly limited as long as it is a compound capable of substituting a hydrogen atom in a terminal hydroxy group (-OH) of the polyoxyalkylene polymer with an alkali metal atom. The metal alkoxide is preferably an alkali metal alkoxide having 1 to 4 carbon atoms. Examples of the alkali metal alkoxide include, for example, sodium methoxide, potassium methoxide, sodium ethoxide, potassium ethoxide, etc. Two or more types of the metal alkoxide can be used in combination, but preferably one type of the metal alkoxide is used alone.

An unsaturated group-containing halide is not particularly limited as long as it is a compound having a nonaromatic unsaturated bond and a halogen atom. Examples of the unsaturated group-containing halide include a compound represented by Formula (1) below:

CH₂=CHRX (1)

in which R is a divalent organic group;
the organic group may include a heteroatom such as an oxygen atom, a nitrogen atom, a sulfur atom, a silicon atom, a phosphorus atom, or a halogen atom; and
X is a halogen atom. Examples of the unsaturated group-containing halide include allyl chloride, methallyl chloride (3-chloro-2-methyl-1-propene), etc. Two or more types of the unsaturated group-containing halide can be used in combination, but preferably one type of the unsaturated group-containing halide is used alone.

The pH of the resulting crude unsaturated group-containing polyoxyalkylene polymer is preferably 9.0 or less. The pH of 9.0 or less allows easy removal of an alkaline component. When the alkaline component is removed well, an oil phase can be easily separated from washing water. Therefore, the pH of the crude unsaturated group-containing polyoxyalkylene polymer of 9.0 or less allows high removal efficiency of a metal impurity or a salt upon purification of the crude unsaturated group-containing polyoxyalkylene polymer.

The crude unsaturated group-containing polyoxyalkylene polymer obtained by the above-described method includes a metal impurity or a salt as an impurity. A water-soluble compound as the impurity to be removed may be exemplified by an alkali metal compound or a compound derived from a DMC catalyst. More specifically, examples of the water-soluble compound include a zinc salt, a cobalt salt, a cyanocobalt complex salt, an alkali metal salt, etc. In particular, if a terminus of an alkoxidized polyoxyalkylene polymer is reacted with an unsaturated group-containing halide to introduce an unsaturated bond to the terminus of the polyoxyalkylene polymer, then a byproduct alkali metal halide is included in the crude unsaturated group-containing polyoxyalkylene polymer.

Then, the polyoxyalkylene polymer having the unsaturated bond at its terminus is purified so that an alkali metal halide, which is a byproduct of a reaction of an alkoxidized terminus with an unsaturated group-containing halogen compound, is removed from the polyoxyalkylene polymers having the unsaturated bond at its terminus. Typically, a compound derived from a DMC catalyst such as a cobalt salt or a cyanocobalt complex salt along with an alkali metal salt such as an alkali metal halide is removed from the crude unsaturated group-containing polyoxyalkylene polymer by washing the crude unsaturated group-containing polyoxyalkylene polymer including an impurity with water. In other words, washing water after such washing includes the alkali metal halide. Thus, a cyanocobalt complex-containing aqueous solution, from which cobalt is intended to be removed, may include the alkali metal halide. Examples of the alkali metal halide include sodium chloride, potassium chloride, sodium bromide, potassium bromide, etc.

In the above-described purification method, the crude unsaturated group-containing polyoxyalkylene polymer may be washed with water, or a solution of the crude unsaturated group-containing polyoxyalkylene polymer in an organic solvent may be washed with water.

When the crude unsaturated group-containing polyoxyalkylene polymer in a liquid form is washed with water, after the washing, an aqueous phase is separated from an oil phase that primarily consists of the crude unsaturated group-containing polyoxyalkylene polymer in the liquid form. A water-soluble compound as an impurity is extracted into the aqueous phase.

When the solution of the crude unsaturated group-containing polyoxyalkylene polymer in an organic solvent is washed with water, a hydrophobic organic solvent that can be separated from water is used as the organic solvent. After the washing, an aqueous phase is separated from an oil phase that primarily consists of the solution of the crude unsaturated group-containing polyoxyalkylene polymer in an organic solvent. A water-soluble compound as an impurity is extracted into the aqueous phase.

A temperature at which the washing with water is performed is not particularly limited as long as a desired amount of the impurity can be removed from the crude unsaturated group-containing polyoxyalkylene polymer. The temperature at which the washing with water is performed is preferably 10 to 90°C from the viewpoint of easy extraction of the water-soluble compound as the impurity into the aqueous phase.

A number of times of the washing with water is not particularly limited. Depending on an amount of washing water, the washing with water is preferably performed any number of times selected from two or more from the viewpoint of a purification effect.

Acidic water can also be used as the washing water. When the acidic water is used to wash the crude unsaturated group-containing polyoxyalkylene polymer, the impurity tends to be removed efficiently.

For the washing performed once or more, the pH of the washing water after the last washing is preferably 3.5 to 8 and further preferably 4.0 to 6.5. Furthermore, for the washing performed once or more, the pH of the washing water after any of the washes is preferably 3.5 to 8 and further preferably 4.0 to 6.5. The pH of the washing water falling within the above range provides a high impurity removal effect.

An acidic component to be added to the acidic water is preferably at least one selected from the group consisting of ascorbic acid, isoascorbic acid, an ascorbic acid ester, an isoascorbic acid ester, an ether derivative of ascorbic acid, an ether derivative of isoascorbic acid, citric acid, and sulfuric acid from the viewpoint of an impurity removal effect. Examples of the ester derivative include a fatty acid ester or a phosphate ester. Examples of the ether derivative include a glucoside.

A mixing ratio of the crude unsaturated group-containing polyoxyalkylene polymer to water is not particularly limited, as long as a phase of the unsaturated group-containing polyoxyalkylene polymer can be separated from an aqueous phase. An amount of the water is preferably 10 to 1000 parts by weight and more preferably 20 to 500 parts by weight relative to 100 parts by weight of a crude unsaturated group-containing polyether.

A number of times of extraction of the water-soluble compound into the aqueous phase is not particularly limited. The number of times of extraction is appropriately determined, taking into consideration an amount of the water-soluble compound to be removed by washing with water. The number of times of extraction is preferably 1 to 10, more preferably 2 to 6, and particularly preferably 2 or 3.

A method other than the above-described purification method includes the following method. For this method, the crude unsaturated group-containing polyoxyalkylene polymer is first dissolved into a solvent capable of being liquid-liquid separated when mixed with water. The resulting solution is then mixed with water to extract an alkaline component, a metal impurity derived from a DMC catalyst, and a salt into an aqueous phase. In such a purification method, following extraction, an oil phase, which is a solution of the unsaturated group-containing polyoxyalkylene polymer, is separated from the aqueous phase.

Examples of the solvent capable of being liquid-liquid separated when mixed with water include, for example, a chain aliphatic hydrocarbon solvent, an alicyclic hydrocarbon solvent, an aromatic hydrocarbon solvent, a hydrophobic alcohol solvent, an ether solvent, a halide thereof, etc. Specific examples of such a solvent include a chain aliphatic hydrocarbon solvent such as butane, pentane, hexane, heptane, octane, nonane, decane, or dodecane; an alicyclic hydrocarbon solvent such as cyclohexane or cyclopentane; an aromatic hydrocarbon solvent such as benzene, toluene, or xylene; a hydrophobic alcohol solvent such as butanol or pentanol; an ether solvent such as dimethyl ether, diethyl ether, or diisopropyl ether; a halogenated aliphatic hydrocarbon solvent such as methylene chloride, methyl chloroform, carbon tetrachloride, dichlorodifluoromethane, or perchloroethylene; a halobenzene solvent, etc. The solvent is not limited to the above-described specific examples. Examples of the halobenzene solvent include benzene substituted with one or more halogen atoms selected from a chlorine atom, a bromine atom, or an iodine atom. Specific examples of the halobenzene solvent include chlorobenzene, dichlorobenzene, bromobenzene, etc.

The above-described method for producing a polyoxyalkylene polymer modified with a hydrolyzable silyl group includes polymerizing alkylene oxide using a DMC catalyst. Therefore, it can also be said that a cyanocobalt complex-containing aqueous solution obtained during a purification step in a process of producing a polyoxyalkylene polymer modified with a hydrolyzable silyl group is a solution resulting from a method for producing a polyoxyalkylene polymer, the method including polymerizing alkylene oxide. The cyanocobalt complex-containing aqueous solution is preferably a solution resulting from a method for producing a polyoxyalkylene polymer, the method including polymerizing alkylene oxide using a zinc hexacyanocobaltate complex as a catalyst.

### (Copper compound)

A copper compound is not particularly limited unless the desired effect is impaired. Various copper compounds may be used as the copper compound. The copper compound may be a compound that can produce a monovalent copper ion or a compound that can produce a divalent copper ion. Typically, an organic copper salt or an inorganic copper salt can be used as the copper compound. The copper compound is preferably the inorganic copper salt from the viewpoints of easy availability, inexpensiveness, an excellent cobalt removal effect, etc. Particularly suitable examples of the copper compound include, for example, copper(II) chloride, copper(I) chloride, copper(II) fluoride, copper(II) nitrate, copper(II) sulfate, etc. Among these, copper(II) sulfate is particularly preferred.

An amount of the copper compound to be used is not particularly limited. The amount of copper compound to be used is preferably determined as appropriate based on a type or a concentration of the cyanocobalt complex included in the cyanocobalt complex-containing aqueous solution. When the cyanocobalt complex is a zinc hexacyanocobaltate complex, the amount of the copper compound to be used is preferably 6 mol or more in terms of copper relative to 1 mol of cobalt in the cyanocobalt complex-containing aqueous solution.

### (Dithiocarbamate polymer)

A dithiocarbamate polymer is not particularly limited as long as it is a polymer having a dithiocarbamate structure. Suitable examples of the dithiocarbamate polymer include, for example, a polymer having a structure represented by Formula (2) below or a polymer represented by Formula (3) below.

(-(CH₂CH₂NR¹)ₐ-CH₂CH₂)₂-N-(CH₂CH₂NR¹)ₐ- (2)

in which R¹ is each independently a hydrogen atom, a dithiocarboxylic acid group, or a group represented by Formula (a) below:

-CS-S⁻A⁺ (a);

A⁺ is a monovalent cation;
three a's are each independently an integer of 0 or more;
a sum of three a's is 15 or more; and
at least one of a plurality of R¹s is a group represented by Formula (a). Note that, in the structure represented by Formula (2), two groups represented by - (CH₂CH₂NR¹)ₐ-CH₂CH₂- and one group represented by -(CH₂CH₂NR¹)ₐ- are bonded to the same nitrogen atom.
R⁵-(R³-Z(-CH₂C(OH)HCH₂NR⁴-R³-NR⁴-)ₓ-H)_{y} (3)

In Formula (3), R³ is each independently an organic group or a group represented by Formula (b) below:

-(-R⁶-NR⁴-R⁶-)_{z}- (b).

R⁴ is each independently a hydrogen atom, a dithiocarboxylic acid group, or a group represented by Formula (a) below:

-CS-S-A+ (a).

A⁺ is a monovalent cation. R⁵ is a nitrogen atom or an optionally substituted organic group. R⁶ is each independently an organic group. Z is -O-, -S-, or -NR⁴-.
x is an integer of 10 or more.
y is an integer of 2 or more.
z is an integer of 1 to 5.

A ratio of a sum of a number of moles of the dithiocarboxylic acid group and a number of moles of the group represented by Formula (a) to a number of moles of R¹ in Formula (2) is not particularly limited as long as the desired effect is achieved. The ratio is preferably 50% by mole or more and more preferably 80% by mole or more.

A⁺ in Formula (a) in Formula (2) is a monovalent cation. The monovalent cation for A⁺ may be an organic cation or an inorganic cation. The monovalent cation for A⁺ is preferably a monovalent inorganic cation, more preferably a monovalent metal ion, further preferably an alkali metal ion, and particularly preferably a sodium ion.

In Formula (2), the sum of three a's is preferably 100 or more and more preferably 500 or more.

The dithiocarbamate polymer represented by Formula (2) can be produced by any of the known methods. Examples of the known method include, for example, a method in which polyethyleneimine (PEI) is reacted with carbon disulfide in the presence of a base.

In Formula (3), R³, is an organic group or a group represented by Formula (b) above. The organic group for R³ may be an aliphatic group, an aromatic group, or a combination of an aliphatic group and an aromatic group. The organic group for R³ is preferably an aliphatic group and more preferably an aliphatic hydrocarbon group. The aliphatic hydrocarbon group is preferably an alkylene group, more preferably an alkylene group having 1 or more and 4 or less carbon atoms, and particularly preferably an ethylene group.

In Formula (3), x is preferably 25 or more.

In Formula (3), y is preferably 2.

In Formula (3), R⁵ is preferably a nitrogen atom.

A ratio of a sum of a number of moles of the dithiocarboxylic acid group and a number of moles of the group represented by Formula (a) to a number of moles of R⁴ in Formula (3) is not particularly limited as long as the desired effect is achieved. The ratio is preferably 50% by mole or more and more preferably 80% by mole or more.

Formula (a) in Formula (3) is the same as Formula (a) in Formula (2).

In Formula (3), Z is preferably -NR⁴-.

The dithiocarbamate polymer represented by Formula (3) can be produced by any of the known methods. Examples of the known method include, for example, a method in which polyamine is reacted with carbon disulfide in aqueous solution, etc.

Preferably, the dithiocarbamate polymer represented by Formula (3) can be produced by reacting a terpolymer composed of ethylenediamine (EDA), tris(2-aminoethyl)amine (TREN), and PEI with carbon disulfide.

A form of a dithiocarbamate to be used in preparation of a cobalt-containing aqueous solution having a pH of less than 5.0 is not particularly limited. A solid dithiocarbamate polymer may be used, or a solution of a dithiocarbamate polymer may be used. The solution of a dithiocarbamate polymer is preferably an aqueous solution. A concentration of a solution of a dithiocarbamate is not particularly limited as long as a desired amount of a dithiocarbamate can be added to a cobalt-containing aqueous solution having a pH of less than 5.0.

An amount of the dithiocarbamate polymer to be used is not particularly limited unless the desired effect is not impaired. Preferably, the amount of the dithiocarbamate polymer to be used is determined as appropriate by measuring in advance a type or a concentration of a cyanocobalt complex included in a cyanocobalt complex-containing aqueous solution. The amount of the dithiocarbamate polymer to be used is preferably 0.1 to 10000 mg/L, for example, as a concentration in a cobalt-containing acidic aqueous solution having a pH of less than 5.0.

### (Acid)

An acid is used when a cobalt-containing acidic aqueous solution having a pH of less than 5.0 is prepared using a cyanocobalt complex-containing aqueous solution having a pH of 5.0 or more. The acid is typically a protic acid. The protic acid may be an organic acid or an inorganic acid. Examples of the organic acid include acetic acid, formic acid, propionic acid, butyric acid, succinic acid, oxalic acid, fumaric acid, maleic acid, lactic acid, etc. Examples of the inorganic acid include hydrochloric acid, sulfuric acid, nitric acid, phosphoric acid, etc. Among these acids, hydrochloric acid or sulfuric acid is preferred from the viewpoints of easy availability, inexpensiveness, etc.

### (Cobalt-containing acidic aqueous solution)

A cobalt-containing acidic aqueous solution is a cobalt-containing aqueous solution having a pH of less than 5.0 obtained by mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer.

A method for mixing the cyanocobalt complex-containing aqueous solution having a pH of less than 5.0, the copper compound, and the dithiocarbamate polymer, or a method for mixing the cyanocobalt complex-containing aqueous solution having a pH of 5.0 or more, the acid, the copper compound, and the dithiocarbamate polymer is not particularly limited and various methods may be used. Such a mixing method includes, for example, dynamic mixing such as rotation of a mixing impeller or static mixing such as a static mixer. These mixing methods may be performed in combination. The mixing method is preferably stirring an aqueous solution. A stirring time is not particularly limited, and is preferably 30 minutes or more.

When the cyanocobalt complex-containing aqueous solution having a pH of less than 5.0, the copper compound, and the dithiocarbamate polymer are mixed, or the cyanocobalt complex-containing aqueous solution having a pH of 5.0 or more, the acid, the copper compound, and the dithiocarbamate polymer are mixed, a surfactant may be added to the cyanocobalt complex-containing aqueous solution to the extent that the effect of the present invention is not impaired.

The pH of the cobalt-containing acidic aqueous solution is preferably 3.0 or more and less than 5.0 and more preferably 4.0 or more and less than 5.0. The pH of the cobalt-containing acidic aqueous solution falling within the above range achieves a good cobalt removal effect.

### (First precipitate)

A first precipitate is a precipitate produced in a cobalt-containing acidic aqueous solution having a pH of less than 5.0 by mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer. Note that, the cobalt-containing acidic aqueous solution can include another solid other than the first precipitate along with the first precipitate. The other solid is typically derived from the cyanocobalt complex-containing aqueous solution having a pH of less than 5.0 or 5.0 or more, the copper compound, the dithiocarbamate polymer, or the acid.

Then, the pH of the cobalt-containing acidic aqueous solution in which the first precipitate has been produced is adjusted to 8.0 or more to produce a second precipitate in a cobalt-containing basic aqueous solution.

### (Cobalt-containing basic aqueous solution)

A cobalt-containing basic aqueous solution is a cobalt-containing aqueous solution obtained by adjusting the pH of a cobalt-containing acidic aqueous solution in which the first precipitate has been produced to 8.0 or more.

A method for adjusting the pH of the cobalt-containing acidic aqueous solution to 8.0 or more is not particularly limited. Examples of the method for adjusting the pH of the cobalt-containing acidic aqueous solution to 8.0 or more include a method in which a basic compound such as sodium hydroxide, sodium carbonate, sodium hydrogen carbonate, potassium hydroxide, potassium carbonate, or potassium hydrogen carbonate is added, etc.

The pH of the cobalt-containing basic aqueous solution is 8.0 or more, preferably 8.0 to 11.0, and more preferably 9.5 to 11.0.

### (Second precipitate)

A second precipitate is a precipitate produced in a cobalt-containing basic aqueous solution by adjusting the pH of a cobalt-containing acidic aqueous solution to 8.0 or more. Note that, the cobalt-containing basic aqueous solution can include another solid other than the first precipitate or the second precipitate, along with the first precipitate and the second precipitate. The other solid is typically derived from the cyanocobalt complex-containing aqueous solution having a pH of less than 5.0 or 5.0 or more, the copper compound, the dithiocarbamate polymer, or the acid.

Then, at least a portion of the first precipitate and at least a portion of the second precipitate from the cobalt-containing basic aqueous solution including the first precipitate and the second precipitate are removed.

### (Method for removing first precipitate and second precipitate)

A method for removing a first precipitate and a second precipitate is not particularly limited. The first precipitate and the second precipitate include cobalt derived from a cyanocobalt complex-containing aqueous solution. Therefore, an amount of the first precipitate and the second precipitate to be removed is preferably 50% by weight or more, more preferably 70% by weight or more, further preferably 80% by weight or more, further more preferably 90% by weight or more, and most preferably 100% by weight relative to a total amount of the first precipitate and the second precipitate. In other words, the amount of first precipitate and the second precipitate to be removed is preferably 50% by weight to 100% by weight, more preferably 70% by weight to 100% by weight, further preferably 80% by weight to 100% by weight, and further more preferably 90% by weight to 100% by weight relative to a total amount of the first precipitate and the second precipitate.

Examples of a method for removing the first precipitate and the second precipitate include, for example, precipitation and separation using a precipitation tank, etc.; separation of the first precipitate and the second precipitate from a supernatant using a centrifuge; filtration of the first precipitate and the second precipitate through a filter, etc. The method for removing the first precipitate and the second precipitate is preferably a method in which a cobalt-containing basic aqueous solution including the first precipitate and the second precipitate is left to stand in a tank or a vessel to precipitate the first precipitate and the second precipitate, and then a supernatant is obtained. According to this method, the first precipitate and the second precipitate can be continuously removed since a supernatant is continuously or intermittently collected while the cobalt-containing basic aqueous solution including the first precipitate and the second precipitate is continuously or intermittently fed into a tank or a vessel, and the cobalt-containing basic aqueous solution remains in the tank or the vessel for a sufficiently long time.

Typically, the cobalt-containing basic aqueous solution from which the first precipitate and the second precipitate have been thus removed is treated as an effluent after being neutralized or treated to reduce BOD or COD in an activated sludge tank, etc., if necessary. The cobalt-containing basic aqueous solution from which the first precipitate and the second precipitate have been removed may be diluted with water, if necessary. Even when the cobalt-containing basic aqueous solution from which the first precipitate and the second precipitate have been removed is diluted to meet a standard for a cobalt content in an effluent, an amount of water to be used for dilution and a workload for dilution are reduced since a cobalt content has been reduced in advance by the above-described method.

### <<Second method>>

A method for reducing a content of cobalt in a cyanocobalt complex-containing aqueous solution comprising a cyanocobalt complex, the method including: mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0, thereby obtaining a cobalt-containing acidic aqueous solution including the first precipitate;
removing at least a portion of the first precipitate from the cobalt-containing acidic aqueous solution including the first precipitate;
adjusting the pH of the cobalt-containing acidic aqueous solution from which at least a portion of the first precipitate has been removed to 8.0 or more to produce a second precipitate; and
removing at least a portion of the second precipitate from a cobalt-containing basic aqueous solution including the second precipitate.
is hereinafter referred to as a second method.

The second method is the same as the first method, except that
at least a portion of the first precipitate is removed from the cobalt-containing acidic aqueous solution including the first precipitate after the first precipitate is produced and before the second precipitate is produced;
a second precipitate is produced in the cobalt-containing acidic aqueous solution from which at least a portion of the first precipitate has been removed; and
at least a portion of the second precipitate is removed from the cobalt-containing basic aqueous solution including the second precipitate.

A method for removing at least a portion of the first precipitate from the cobalt-containing acidic aqueous solution including the first precipitate is the same as the method for removing the first precipitate and the second precipitate from the cobalt-containing basic aqueous solution in the first method. An amount of the first precipitate to be removed is preferably 50% by weight or more, more preferably 70% by weight or more, further preferably 80% by weight or more, further more preferably 90% by weight or more, and most preferably 100% by weight relative to a total amount of the first precipitate. In other words, the amount of the first precipitate to be removed is preferably 50% by weight to 100% by weight, more preferably 70% by weight to 100% by weight, further preferably 80% by weight to 100% by weight, and further more preferably 90% by weight to 100% by weight relative to a total amount of the first precipitate.

A method of producing the second precipitate in the cobalt-containing acidic aqueous solution from which at least a portion of the first precipitate has been removed is the same as the method for producing the second precipitate in the cobalt-containing basic aqueous solution by adjusting the pH of the cobalt-containing acidic aqueous solution in which the first precipitate has been produced to 8.0 or more in the first method, except that at least a portion of the first precipitate has been removed from the cobalt-containing acidic aqueous solution.

A method for removing at least a portion of the second precipitate from the cobalt-containing basic aqueous solution including the second precipitate is the same as the method for removing the first precipitate and the second precipitate from the cobalt-containing basic aqueous solution in the first method, except that at least a portion of the first precipitate has been removed in the cobalt-containing basic aqueous solution. An amount of the second precipitate to be removed is preferably 50% by weight or more, more preferably 70% by weight or more, further preferably 80% by weight or more, further more preferably 90% by weight or more, and most preferably 100% by weight relative to a total amount of the second precipitate. In other words, the amount of the second precipitate to be removed is preferably 50% by weight to 100% by weight, more preferably 70% by weight to 100% by weight, further preferably 80% by weight to 100% by weight, and further more preferably 90% by weight to 100% by weight relative to a total amount of the second precipitate.

### EXAMPLES

The present invention will be specifically described with reference to Examples. Note that, the present invention is not limited to Examples below.

### (Number average molecular weight)

A number average molecular weight was measured using a gel permeation chromatography (GPC) analyzer (manufactured by Tosoh Corporation, "HLC-8220") and a column (manufactured by Tosoh Corporation, TSKgel SuperH series). For the GPC measurement, a measurement temperature was set at 40°C and tetrahydrofuran (THF) was used as a mobile phase. The number average molecular weight (Mn) was calculated from a GPC measurement chart obtained by the GPC measurement. Note that, the number-average molecular weight (Mn) is a relative value in terms of polystyrene.

### (Cobalt concentration)

A cobalt concentration was measured by radio frequency inductively coupled plasma mass spectrometry (ICP-MS) device.

### (Synthesis Example 1)

Polyoxypropylene having hydroxy groups at both termini was obtained by polymerization of propylene oxide using polyoxypropylene glycol with a number average molecular weight of about 4500 serving as an initiator and a zinc hexacyanocobaltate glyme complex catalyst. Then, 1.2 mol equivalents of sodium methoxide was added to the hydroxy groups in the resulting hydroxy group-terminated polyoxypropylene as a 28% by weight methanol solution. Methanol was then distilled off by vacuum devolatilization. Thereafter, 1.5 mol equivalents of allyl chloride relative to the hydroxy groups was added thereto, thereby converting the terminal hydroxy groups into allyl groups. Unreacted allyl chloride was removed by devolatilization under reduced pressure to obtain unpurified allyl group-terminated polyoxypropylene. Then, 150 parts by weight of n-hexane, 200 parts by weight of water, and 1.6 parts by weight of a 37.5% by weight sulfuric acid solution were added to 100 parts by weight of the resulting unpurified allyl group-terminated polyoxypropylene, followed by stirring. An aqueous solution and a hexane solution including the allyl group-terminated polyoxypropylene were then separated by centrifugation. The resulting aqueous solution (cyanocobalt complex-containing aqueous solution) had a cobalt concentration of 2600 µg/L, a pH of 4.5, and a sodium chloride concentration of 0.7% by weight.

### (Example 1)

One thousand parts by weight of the cyanocobalt complex-containing aqueous solution obtained in Synthesis Example 1 was placed in a beaker. Then, 0.6 parts by weight of copper(II) sulfate pentahydrate was added to the cyanocobalt complex-containing aqueous solution. The cyanocobalt complex-containing aqueous solution in the beaker was then stirred at 300 rpm for 30 minutes using a mechanical stirrer. Next, 0.3 parts by weight of a dithiocarbamate polymer (MetClear MR2405 (manufactured by SUEZ)) was added to the cyanocobalt complex-containing aqueous solution. The cyanocobalt complex-containing aqueous solution was then further stirred at 300 rpm for 30 minutes to obtain a cobalt-containing acidic aqueous solution. After the stirring, the cobalt-containing acidic aqueous solution was left to stand for 60 minutes to precipitate a first precipitate. After the first precipitate was precipitated, a supernatant (cobalt-containing acidic aqueous solution) was sampled and a cobalt concentration in the supernatant was measured. The results are shown in Table 1.

The cobalt-containing acidic aqueous solution obtained by the above-described method was placed in another beaker. While stirring the cobalt-containing acidic aqueous solution at 300 rpm, a 0.1 M sodium hydroxide aqueous solution (manufactured by Merck) was added to the cobalt-containing acidic aqueous solution until the pH of the aqueous solution was 9.5, thereby obtaining a cobalt-containing basic aqueous solution. The cobalt-containing basic aqueous solution was then stirred for 30 minutes. The cobalt-containing basic aqueous solution was then left to stand for 60 minutes to precipitate a second precipitate. A supernatant (cobalt-containing basic aqueous solution) was sampled and a cobalt concentration in the supernatant was measured. The results are shown in Table 1.

### (Example 2)

A cobalt removal treatment was performed in the same manner as in Example 1, except that a cyanocobalt complex-containing aqueous solution newly obtained in the same manner as in Synthesis Example 1 was used, and that the dithiocarbamate polymer (MetClear MR2405 (manufactured by SUEZ)) was changed to a dithiocarbamate polymer (MetClear MR2435 (manufactured by SUEZ)). The cyanocobalt complex-containing aqueous solution had a cobalt concentration of 2800 µg/L, a pH of 4.5, and a sodium chloride concentration of 0.7% by weight.

### (Comparative Example 1)

A cobalt removal treatment was performed in the same manner as in Example 1, except that copper(II) sulfate pentahydrate was changed to magnesium sulfate.

### (Comparative Example 2)

A cobalt removal treatment was performed in the same manner as in Example 1, except that copper(II) sulfate pentahydrate was changed to zinc sulfate.

### (Comparative Example 3)

A cobalt removal treatment was performed in the same manner as in Example 1, except that the dithiocarbamate polymer was changed to an anionic acrylamide copolymer (KLARAID AB1501 (manufactured by SUEZ)).

**[Table 1]**

| | | Example | | Comparative Example | | |
|---|---|---|---|---|---|---|
| | | 1 | 2 | 1 | 2 | 3 |
| Cyanocobalt complex-containing aqueous solution | Cobalt concentration (µg/L) | 2600 | 2800 | 2600 | 2600 | 2600 |
| Cobalt-containing acidic aqueous solution | pH | 4.5 | 4.5 | 4.5 | 4.5 | 4.5 |
| | Metal compound | CuSO₄ | CuSO₄ | MgSO₄ | ZnSO₄ | CuSO₄ |
| | Polymer | MR2405 | MR2435 | MR2405 | MR2405 | AB1501 |
| | Cobalt concentration (µg/L) | 1100 | 1300 | 1300 | 1900 | - |
| | Amount of residual Co (%) | 42 | 46 | 50 | 73 | - |
| Cobalt-containing basic aqueous solution | pH | 9.5 | 9.5 | 9.5 | 9.5 | 9.5 |
| | Cobalt concentration (µg/L) | 160 | 150 | 1400 | 1300 | 1300 |
| | Amount of residual Co (%) | 6 | 5 | 54 | 50 | 42 |

Examples 1 and 2 demonstrate that, when a first precipitate and a second precipitate are removed by adding a copper compound and a dithiocarbamate polymer to a cyanocobalt complex-containing aqueous solution to produce a first precipitate in a cobalt-containing acidic aqueous solution having a pH of less than 5.0 and adjusting the pH of the cobalt-containing acidic aqueous solution within the predetermined range as described above to produce a second precipitate in a cobalt-containing basic aqueous solution, cobalt included in the cyanocobalt complex-containing aqueous solution is removed well. On the other hand, for Comparative Examples 1 to 3 in which a metal compound other than the copper compound or a polymer other than the dithiocarbamate polymer was added to the cyanocobalt complex-containing aqueous solution, cobalt contained in the cyanocobalt complex-containing aqueous solution was not removed well.

### (Example 3)

A cobalt removal treatment was performed in the same manner as in Example 1, except that a cyanocobalt complex-containing aqueous solution newly obtained in the same manner as in Synthesis Example 1 was used. The resulting cyanocobalt complex-containing aqueous solution had a cobalt concentration of 2400 µg/L, a pH of 4.5, and a sodium chloride concentration of 0.7% by weight.

### (Comparative Example 4)

A cobalt removal treatment was performed in the same manner as in Example 3, except that the pH was adjusted to 6.5 by adding a 0.1 M sodium hydroxide aqueous solution (manufactured by Merck) to the cyanocobalt complex-containing aqueous solution. Note that, in Table 2, the cobalt complex-containing aqueous solution with the pH being adjusted to 6.5 is described as "cobalt-containing acidic aqueous solution" for convenience.

### (Comparative Example 5)

A cobalt removal treatment was performed in the same manner as in Example 3, except that a 0.1 M sodium hydroxide aqueous solution (manufactured by Merck) was added to the cobalt-containing acidic aqueous solution until the pH was 6.5. Note that, in Table 2, the cobalt-containing aqueous solution with the pH being adjusted to 6.5 is described as "cobalt-containing basic aqueous solution" for convenience.

**[Table 2]**

| | | Example | Comparative Example | |
|---|---|---|---|---|
| | | 3 | 4 | 5 |
| Cyanocobalt complex-containing aqueous solution | Cobalt concentration (µg/L) | 2400 | 2400 | 2400 |
| Cobalt-containing acidic aqueous solution | pH | 4.5 | 6.5 | 4.5 |
| | Metal compound | CuSO₄ | CuSO₄ | CuSO₄ |
| | Polymer | MR2405 | MR2405 | MR2405 |
| | Cobalt concentration (µg/L) | 1100 | 1100 | 1100 |
| | Amount of residual Co (%) | 46 | 46 | 46 |
| Cobalt-containing basic aqueous solution | pH | 9.5 | 9.5 | 6.5 |
| | Cobalt concentration (µg/L) | 120 | 290 | 930 |
| | Amount of residual Co (%) | 5 | 12 | 39 |

Example 3 demonstrates that, when a first precipitate and a second precipitate are removed by adding a copper compound and a dithiocarbamate polymer to a cyanocobalt complex-containing aqueous solution to produce a first precipitate in a cobalt-containing acidic aqueous solution having a pH of less than 5.0 and adjusting the pH of the cobalt-containing acidic aqueous solution within the predetermined range as described above to form a second precipitate in a cobalt-containing basic aqueous solution, cobalt included in the cyanocobalt complex-containing aqueous solution is removed well. On the other hand, for Comparative Examples 4 and 5 in which the pH of the cobalt-containing acidic aqueous solution was 5.0 or more or the pH of the cobalt-containing acidic aqueous solution was adjusted to less than 8.0 when the second precipitate was produced, cobalt in the cyanocobalt complex-containing aqueous solution was not removed well.

## Claims

1. A method for reducing a content of cobalt in a cyanocobalt complex-containing aqueous solution comprising a cyanocobalt complex, the method comprising:
mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0;
adjusting the pH of the cobalt-containing acidic aqueous solution in which the first precipitate has been produced to 8.0 or more to produce a second precipitate in a cobalt-containing basic aqueous solution; and
removing at least a portion of the first precipitate and at least a portion of the second precipitate from the cobalt-containing basic aqueous solution comprising the first precipitate and the second precipitate.

2. A method for reducing a content of cobalt in a cyanocobalt complex-containing aqueous solution comprising a cyanocobalt complex, the method comprising:
mixing a cyanocobalt complex-containing aqueous solution having a pH of less than 5.0, a copper compound, and a dithiocarbamate polymer, or mixing a cyanocobalt complex-containing aqueous solution having a pH of 5.0 or more, an acid, a copper compound, and a dithiocarbamate polymer to produce a first precipitate in a cobalt-containing acidic aqueous solution having a pH of less than 5.0, thereby obtaining a cobalt-containing acidic aqueous solution comprising the first precipitate;
removing at least a portion of the first precipitate from the cobalt-containing acidic aqueous solution comprising the first precipitate;
adjusting the pH of the cobalt-containing acidic aqueous solution from which at least a portion of the first precipitate has been removed to 8.0 or more to produce a second precipitate; and
removing at least a portion of the second precipitate from the cobalt-containing basic aqueous solution comprising the second precipitate.

3. The method according to claim 1 or 2, wherein the copper compound is copper(II) sulfate.

4. The method according to claim 1 or 2, wherein the cyanocobalt complex is a zinc hexacyanocobaltate complex.

5. The method according to claim 4, wherein the cyanocobalt complex-containing aqueous solution is a solution resulting from a method for producing a polyoxyalkylene polymer, the method for producing a polyoxyalkylene polymer comprising polymerizing alkylene oxide using the zinc hexacyanocobaltate complex as a catalyst.

6. The method according to claim 1 or 2, wherein the cyanocobalt complex-containing aqueous solution comprises sodium chloride.
